(19) **Europäisches Patentamt**

**European Patent Office**

**Office européen des brevets**

(11) **EP 1 351 891 B1**

(12) **EUROPEAN PATENT SPECIFICATION**

(45) Date of publication and mention
of the grant of the patent:
**15.09.2004 Bulletin 2004/38**

(51) Int Cl.⁷: **C02F 1/58**, C02F 1/60

(21) Application number: **01983873.9**

(86) International application number:
**PCT/NO2001/000455**

(22) Date of filing: **16.11.2001**

(87) International publication number:
**WO 2002/040407 (23.05.2002 Gazette 2002/21)**

(54) **METHOD FOR UTILISING A WASTE SLURRY FROM SILICON WAFER PRODUCTION**

VERFAHREN ZUR VERWENDUNG EINER ABFALLAUFSCHLÄMMUNG AUS DER
SILICIUMSCHEIBENPRODUKTION

PROCEDE D'UTILISATION DE SUSPENSION USEE PROVENANT DE LA PRODUCTION DE
TRANCHES DE SILICIUM

(84) Designated Contracting States:
**AT BE CH CY DE DK ES FI FR GB GR IE IT LI LU
MC NL PT SE TR**

(30) Priority: **17.11.2000 DE 10056957**

(43) Date of publication of application:
**15.10.2003 Bulletin 2003/42**

(73) Proprietor: **Metallkraft AS
4677 Kristiansand (NO)**

(72) Inventor: **HENRIKSEN, Knut
N-4623 KRISTIANSAND (NO)**

(74) Representative: **Grünecker, Kinkeldey,
Stockmair & Schwanhäusser Anwaltssozietät
Maximilianstrasse 58
80538 München (DE)**

(56) References cited:
**US-A- 5 578 193**

- **DATABASE WPI Week 199417, Derwent
  Publications Ltd., London, GB; AN 1994-140840,
  XP002907692 & JP 6 087 607 A (NEC CORP ET
  AL.) 29 March 1994**
- **PATENT ABSTRACTS OF JAPAN & JP 04 235
  789 A (NEC KYUSHU LTD) 24 August 1992**
- **PATENT ABSTRACTS OF JAPAN & JP 06 079
  274 A (ASAHI KASEI KOGYO KK) 22 March 1994**
- **PATENT ABSTRACTS OF JAPAN & JP 2000
  140842 A (NGK FRIT CO LTD ET AL.) 23 May 2000**
- **PATENT ABSTRACTS OF JAPAN & JP 2000
  080348 A (MIKURA BUSSAN KK) 21 March 2000**
- **PATENT ABSTRACTS OF JAPAN & JP 01 022
  391 A (NEC KYUSHU LTD) 25 January 1989**

## Description

This invention relates to a method of utilising a waste slurry from silicon wafer production. More specific, this invention relates to a method for utilising the solid fraction of the slurry, which stems from the sawing or slicing of silicon wafers from silicon ingots as a raw material in industrial processes such as for instance production of certain ceramics.

## Background

The world production of highly pure silicon is presently in the order of 20 000 metric tonnes per year (MT/ year). This silicon is mainly consumed by the photo-voltaic industry for production of solar cells and by the semiconductor industry for production of integrated circuits.

Integrated circuits have become an immensely important and very common resource in the last decades. Virtually every person in the developed countries have access to and/or own electronic equipment containing integrated circuits. There are no signs indicating that this importance will decrease in the foreseeable future. On the contrary, it is generally believed that electronic devices will be an even more widespread and integrated part of our lives.

The solar cell panels are not yet common in daily life, but recent development of solar cell panels has seen panels with impressing conversion rates of solar energy to electric energy. Thus it is generally anticipated that solar cell panels will become a widely used source for electric energy. This view finds an ever increasing support from the growing focus on man-made climate change due to the developed countries dependency upon burning fossil fuels for producing our energy.

Both integrated circuits and solar cell panels are thus believed to contribute to a strongly increased demand for highly pure silicon in the near future. Also, both the integrated circuits and solar cells are made from ingots of pure silicon which is sliced into thin discs or wafers. The thickness of these wafers may vary from a few hundred microns to a few millimetres. There are basically two main techniques in use today for slicing high purity silicon ingots into wafers; the wire saw or the diamond saw. However, the wire saw is gaining an increased importance and market share, and we shall therefore focus on this process.

In the case of the wire saw, the ingots are sliced by forcing them through a web of rapidly running steel wires coated with a brass layer. During the slicing process, the wire is constantly rinsed with either glycol or mineral oil containing SiC as abrasive particles. This produces an oil or glycol based slurry containing SiC-particles and kerf remains (small particles of highly pure Si).

Due to the small thickness of the wafers and solar cells, the kerf losses amounts up to 40wt% of the total consumption of highly pure silicon. The kerf remains are typically present in an amount ranging from 10-40wt% in the slurry. Thus the present annual slurry production amounts to 10-15000 MT/year, and is expected to increase strongly in the coming years.

The waste slurry is presently deposited in landfills or burned in incinerators, and constitutes thus a large waste problem. The depositing of the slurry in landfills is an environmentally hazardous solution due to the risk of oil or glycol leaching into the soil. This has led to costly environmental safety demands for such landfills. The incineration solves the problem with soil contamination by oil or glycol, but the silicon kerf remains in the slurry are converted to contaminated (often with heavy elements) $SiO_2$ which also must be deposited together with the third constituent of the slurry, SiC.

This solution of the waste slurry problem is unfortunate, both from an economical and environmental point of view. Especially when considering that these kerf remains and SiC-particles are leftovers from some of the commercially available purest raw materials. They thus constitutes valuable materials which are well suited to be applied as raw materials in a number of industrial applications.

## Object of the invention

The first object of this invention is to eliminate the waste disposal by utilising the waste slurry as raw material for other industrial applications.

The second object of this invention is to provide a method for reusing this solid fraction of the silicon sawing slurry sludge as a raw material in the production of ceramics.

## Brief description of the invention

The objects of this invention can be achieved by what is described in the appended claims and/or in the following description.

The objects of the invention can be obtained by exploiting the fact that the solid part of the slurry, being a mixture of very fine and highly pure Si- and SiC-particles, is suitable raw-material for producing certain nonoxide ceramics, including such ceramics as $Si_3N_a$-bonded SiC and Si-bonded SiC. These ceramic materials are known to be suitable for high temperature applications under conditions experienced in the metallurgical industries (aluminium, ferroalloy etc.), and also as kiln furniture materials (setter plates, beams etc.) in the ceramic industries (firing of domestic ware, sanitary ware, tiles, electrical insulators, etc.), and in many other industrial applications to resist wear and corrosion at ambient as well as high temperatures.

The two main steps in the conventional process for manufacturing such ceramic materials are a powder compacting step, normally called forming, and a high temperature step, normally called sintering or firing. Forming implies shaping or moulding by applying pressure. The raw material particles are consolidated into a shape more or less similar to that of the final product. Powder pressing (uniaxial or isostatic), slip casting, extrusion, and injection moulding are examples of common techniques being applied. In the sintering step, the ceramic material comes forth as a result of chemo-physical processes (pure sintering) or a combination of chemo-physical processes and chemical reactions (reaction sintering). Infiltration with liquid metals is another possibility. A ceramic raw material must facilitate compacting and forming, and must give products of high integrity as far as material properties and consistency are concerned.

It is foreseen that the Si-SiC powder mixture can be modified as a ceramic raw material to facilitate a specific forming technique or to obtain special material properties in the final ceramic product. This will include techniques such as spray drying to facilitate dry pressing, and other methods of granulation to facilitate certain semidry or wet forming techniques as such. Addition of more of one of the original ingredients, Si or SiC, to adjust the ratio for special applications is also foreseen. Additions of small amounts of chemical elements such as dopants, and of other ceramic raw materials in the form of particles, whiskers or fibres to produce ceramic composites, are foreseen as means to obtain special properties of the final products.

In order to apply the waste slurry as a raw material for the production of ceramics, the solid fraction consisting of Si- and SiC-particles must be separated from the liquid fraction, glycol or oil. This can in both cases be done by conventional processes such as settling and/or filtration. After separation, the liquid fraction, consisting of oil or glycol, can find new applications in the process industry or be recycled back to the photo-voltaic and/or semiconductor industry.

However, there will normally be a liquid residue in the solid fraction after the initial separation which must be removed before the solid fraction can be used as a ceramic raw material. In the case of separation by settling or filtration, the residue is typically in the range of 5-10 wt% for both the glycol- and oil-based slurries.

In the case of glycol-based slurries, the final separation of the solid and liquid fraction can easily be performed by heating of the precipitate and/or filter cake, up to temperatures in the range of 200-400°C. The resulting solid fraction consists of a very pure mixture of Si- and SiC-particles which is well suited to be reaction sintered into a $Si_3N_4$-bonded SiC. The mixture of pure Si- and SiC-particles is first subject to a pressing and forming into the wanted shape, and thereafter a heating in a nitrogen atmosphere up to a temperature within the range of 1050-1450°C. At these temperatures the Si-particles will react according to the following reaction:

$$3\,Si(s) + 2N_2(g) \rightarrow Si_3N_4(s)$$

and the $Si_3N_4$ will bond the SiC-particles together in a sintering process, and thus forms the ceramic material.

Typical compositions of the resulting precipitate and/or filter cake after the initial separation of the solid fraction of the glycol-based slurry is approximately 65-75 wt% SiC, 15-25 wt% Si and 5-10 wt% glycol. In the case of oil-based slurries, the precipitate/filter cake the figures are approximately 40-60 wt% SiC, 30-50 wt% Si and 5-15 wt% oil. As mentioned, this is an excellent ratio of Si- to SiC-particles for forming $Si_3N_4$-bonded SiC. The method according to this invention can be employed for any mixture of Si- and SiC-particles where the concentration of Si-particles ranges from 2-100 wt%, more preferably from 10-50 wt%, and most preferably from 15-30 wt%. It is preferred to employ mixtures with 15-30 wt% Si-particles since this gives the strongest and most dense ceramic after sintering. From the typical composition of the slurry after the initial removal of the liquid phase, one sees that the most typically resulting composition of the slurry after completion of the removal of the liquid phase normally lies within this range. This is one of the reasons why these slurries are well suited for production of these ceramic materials.

In the case of oil-based slurries, one has that some fractions of the oil residue have too high vaporisation temperatures to be completely removed by heating the precipitate/filter cake. Since the introduction of oxygen into the ceramic material is undesirable, the heating should be performed in an inert atmosphere. This leads to a decomposition of some or all of the hydrocarbons in the oil to form elementary C and $H_2$ in a pyrolysis process. And as a result, the solid fraction consisting of the Si- and SiC-particles becomes mixed with elementary C, typically in the range of 1-10 wt% of the mixture. However, elementary C is detrimental for many refractory and/or metallurgical applications, and the presence of elementary C should therefore be eliminated. Fortunately, this occurs all by itself during the sintering process, since elementary C will react with Si and form SiC before reaching the sintering temperature. All one has to ensure is that the initial powder mixture contains sufficient Si-particles such that there remains sufficiently amounts of Si to form the ceramic bonds after all C has been consumed. Thus, when producing $Si_3N_4$-bonded SiC from oil-based slurries, a typical process includes a heat pre-treatment in a nitrogen atmosphere up to a temperature in the order of 700-800°C until the pyrolysis is completed, and then increase the temperature to the range of 1050-1450°C in order to convert all elementary C to SiC and thereafter converting the remaining Si to $Si_3N_4$ to form the ceramic.

In addition to making $Si_3N_4$-bonded SiC, one can also make Si-bonded SiC (SiSiC) from the oil-based slurries. In this case one substitutes the nitrogen atmosphere with an inert atmosphere, typically an argon atmosphere. In this case one must first decompose the hydrocarbons in a pyrolysis step by heating the slurry to approximately 700-800°C and then increase the temperature to initiate the sintering process. The temperature ranges for the sintering process are essentially the same as in the case of forming $Si_3N_4$-bonded SiC from oil-based slurries.

The sintering temperature must be adjusted according to the Si-particle content in the mixture, and can be as high as above 2000°C. Such adjustments are known to a skilled person. As mentioned, it is preferred to apply slurries where the resulting Si-and SiC-particle mixture contains from 5-25% Si-particles.

Further, there are also known several forming processes for these types ceramics, including isostatic pressing, dry pressing, slip-casting, sintering, extrusion etc. The main idea of this invention is to exploit a waste slurry to produce these types of ceramic materials. Thus these additives, production methods and their resulting ceramics should be considered as incorporated in this invention.

In this way, the problem with disposal is completely solved by reusing substantially all of the liquid phase (glycol or oil) in an industrial application, and by fully reusing the solid components (Si- and SiC-particles) of the waste slurry to form a new set of ceramic products, nonoxide ceramics.

## Detailed description of the invention

The invention will now be described in more detail by way of examples of preferred embodiments. These should not be construed as a limitation of the invention.

Example 1, formation of a $Si_3N_4$-bonded SiC from a glycol-based waste slurry

After the initial separation of the solid fraction of the slurry by settling, one achieved a precipitate with the following composition; 70 wt% SiC, 20 wt% Si and 10 wt% glycol. The precipitate was then uniaxially pressed at a force of 100 MPa to form test specimens with dimension 10 x 10 x 100 mm. The specimens were placed in a gas tight, water cooled, vertical mullite lined tube furnace. The final removal of the glycol was performed by evacuating the furnace and heating the specimens to 400°C for 24 hours.

During the nitridation, the furnace was filled with pure nitrogen at a pressure monitored between 1025 and 1050 mbar. As the nitrogen was consumed, the pressure dropped until the lower set-point where nitrogen was supplied until reaching the upper set-point. The heating of the samples was performed according to the following time/temperature scheme: After completion of the removal of the glycol, the nitrogen was supplied and the temperature was raised with a ratio of 400°/hour until reaching 1100°C where it was kept for 72 hours. Then the temperature was further raised to 1150°C for 24 hours, 1200°C for 48 hours, 1300°C for 6 hours and finally 1350°C for 48 hours.

After nitridation, the resulting test specimens were characterised as follows:

- measurement of bulk density and apparent porosity according to ISO 5017,
- measurement of cold flexural strength according to ASTM C651-91, and
- XRD powder diffraction.

The bulk density was found to be $2.53\pm0.00$ g/cm$^3$, apparent porosity $17.64\pm0.07\%$, and flexural strength $57.4\pm6.36$ MPa. The XRD Powder diffraction analysis was performed on samples of the specimens that was milled to particle diameter < 45 μm. The analysis gave that the $Si_3N_4$ mainly consisted of α- $Si_3N_a$ with minor amounts of β-$Si_3N_4$, and that the SiC consisted of mainly α-SiC. In addition there was found minor amounts of ferro-silicon ($Fe_3Si$).

Commercial silicon nitride bonded silicon carbide materials have typically a density of 2.6-2,7 g/cm$^3$, an apparent porosity of 14.6-18%, and a flexural strength about 60 MPa. Thus, the material according to this invention has a somewhat lower density and the porosity is within normal values. The flexural strength is however below the commercial materials. The test specimens showed clear signs of delamination, which reduces the flexural strength considerably. The reasons for delamination is presently not clear, but is probably connected to the pressing of the specimens with the relatively high glycol content. The material can easily be made stronger by adjusting the pressing operation, and the slurry is thus well suited as a raw material for producing silicon nitride bonded silicon carbide.

Example 2, formation of a Si-bonded SiC from an oil-based waste slurry

After the initial separation of the solid fraction of the slurry by settling, one achieved a precipitate with the following composition; 50 wt% SiC, 40 wt% Si and 10 wt% oil. The precipitate was then uniaxially pressed to form cylindrical test specimens with dimension 20 x 20 mm under a force of 160 MPa.

The specimens were placed in a gas tight, water cooled, vertical mullite lined tube furnace in two batches. The first half of the specimens were heated in an argon atmosphere to about 700°C, while the other half were heated in argon atmosphere up to 1300°C. The first half of the specimens was heated at 150°C/hour up to 700°C, and was kept at that temperature for 2 hours before the furnace was shut down. The second half of the specimens was heated at 150°C/hour up to 1300°C, and was kept at that temperature for 5 hours before the temperature was lowered at a rate of 150°C back to room temperature.

Also these test specimens were characterised by the following investigations:

- measurement of bulk density and apparent porosity according to ISO 5017,
- measurement of cold crushing strength according to ASTM C133-91, and
- XRD powder diffraction.

The resulting bulk density and apparent porosity for both batches are given in Table 1. The table shows that the apparent porosity decreased by 11% during sintering. No liquid phases are expected at these temperatures with the possible exception of minor amounts of copper, zinc and ferrosilicon compounds stemming from wear of the steel wire of the wire saw.

The cold crushing strength of the specimens in batch I, heating temperature 700°C, were, less than 3.5 MPa. The specimens in batch II, heating temperature 1300°C showed a cold crushing strength of 69.1±14.4 MPa.

Samples of the specimens from both batches were milled to particle diameter < 45 μm and analysed in a Phillips PW 1710 XRD powder diffractometer. The analysis of the pyrolysed sludge (batch I) showed that it mainly consisted of α-SiC with some silicon and ferro silicon. There were also traces of cristobalite. The sintered sludge (batch II) consisted mainly of α-SiC with some amounts of cristobalite and ferro silicon, and possibly some traces of quartz.

**Table 1** Bulk density and apparent porosity of heat treated oil-based slurry precipitate

| Batch | Heating temperature (°C) | Bulk density (g/cm$^3$) | Apparent porosity (%) |
|---|---|---|---|
| I | 700 | 1.89±0.01 | 40.28±0.26 |
| II | 1300 | 2.04±0.01 | 29.48±0.65 |

**Claims**

1.  A method for producing non-oxide ceramics,
    **characterised in**

    - **that** the method employs a waste slurry containing a mixture of Si- and SiC-particles and a liquid comprising oil or glycol,
    - **that** the waste slurry is subject to a separation process for removing all or most of the liquid fraction of the waste slurry, and
    - **that** the resulting powder mixture is subject to conventional processes to form the nonoxide ceramic material.

2.  A method according to claim 1,
    **characterised in that** the main part of the liquid fraction of the waste slurry is separated from the solid fraction by settling and subsequent decanting.

3. A method according to claim 2,
   **characterised in that** when the method is applied for producing silicon nitride bonded silicon carbide from a glycol based waste slurry, the production process comprises

   - removing the glycol residue in the precipitate by gentle heating in vacuum,
   - forming the resulting mixture of Si- and SiC-particles into a shaped object, and
   - sintering the ceramic material by heating the shaped object in a nitrogen atmosphere at a temperature where the Si-particles react with $N_2$ to form the silicon nitride bonding the SiC-particles together.

4. A method according to claim 3,
   **characterised in that**

   - the gentle heating for vaporisation of the glycol residue is performed at a temperature in the order of 200-400°C,
   - the compaction is made by a force in the order of 100 MPa, and
   - the sintering is performed at a temperature in the range of 1050-1350°C at a nitrogen pressure in the order of $10^5$ Pa.

5. A method according to claim 3 and 4, in the case when the waste slurry is oil based and contains a mixture of Si- and SiC-particles and mineral oil,
   **characterised in that**

   - the separation of the main part of the liquid phase comprises settling and subsequent decanting, and **in that**
   - the removal of the oil residue comprises heating the precipitate in an inert atmosphere until the hydrocarbons in the oil decomposes by pyrolysis to form elementary carbon,
   - the resulting powder mixture is formed into a shaped object, and
   - the ceramic material is formed by sintering the shaped object in a nitrogen atmosphere at a temperature where the elementary C react with Si to form SiC, and subsequently where the remaining Si-particles react with $N_2$ to form the silicon nitride which sinters the SiC-particles together.

6. A method according to claim 5,
   **characterised in that**

   - the pyrolysis temperature is in the range of 700-800°C, and which is kept for 2 hours,
   - the compaction is made by a force in the order of 100 MPa, and
   - the sintering is performed at a temperature in the order of 1050-1350°C and at a nitrogen pressure in the order of $10^5$ Pa.

7. A method according to claim 2,
   **characterised in that** when the method is applied for producing silicon bonded silicon carbide, the production process comprises

   - removing the oil residue in the precipitate by pyrolysis to form elementary C,
   - forming the resulting mixture of Si- and SiC-particles and elementary C into a shaped object, and
   - sintering the ceramic material by heating the compacted object in an inert atmosphere at a temperature where the Si-particles first react with C to form SiC and then at a temperature where the remaining Si-particles bonds the SiC-particles together.

8. A method according to claim 7,
   **characterised in that**

   - the pyrolysis temperature is in the range of 700-800°C, and which is kept for 2 hours,
   - the compacting is made by a force in the order of 160 MPa, and
   - the sintering is performed at a temperature in the range of 1050-1350°C at an inert gas pressure in the order of $10^5$ Pa.

**9.** A method according to any of claims 1 - 6,
**characterised in that** the composition of the purified Si- and SiC-particle mixture should preferably contain from 2-100 wt% Si-particles, more preferably from 10-50 wt% Si-particles, and most preferably from 15-30% Si-particles.

**10.** A method according to claim 9,
**characterised in that** when the waste slurry is oil based, the resulting composition of the Si- and SiC-particle mixture after the elementary C which formed during pyrolysis of the oil has been converted to SiC, should preferably contain from 2-100 wt% Si-particles, more preferably from 10-50 wt% Si-particles, and most preferably from 15-30% Si-particles.

**11.** A method according to claim 1,
**characterised in that** the conventional production process comprises isostatic pressing, dry pressing, slip-casting, sintering and/or extrusion.

**12.** Use of a waste slurry containing a mixture of Si- and SiC-particles, and a liquid phase comprising glycol or mineral oil to produce a non-oxide ceramic material, $Si_3N_4$-bonded SiC.

**13.** Use of waste slurry from the production of highly pure silicon wafers in the photo-voltaic and/or semiconductor industry to make a non-oxide ceramic material, $Si_3N_4$-bonded SiC according to the method as given in claims 1 - 6 and/or 9.

**14.** Use of waste slurry from the production of highly pure silicon wafers in the photo-voltaic and/or semiconductor industry to make a non-oxide ceramic material, Si-bonded SiC according to the method as given in claims 7 - 8 and/or 10.


**Patentansprüche**

**1.** Verfahren zum Herstellen von Nichtoxid-Keramik, **dadurch gekennzeichnet, dass**:

- bei dem Verfahren eine Abfallaufschlämmung eingesetzt wird, die ein Gemisch aus Si- und SiC-Teilchen und eine Flüssigkeit enthält, die Öl oder Glykol umfasst,

- die Abfallaufschlämmung einem Abscheideverfahren zum Entfernen der gesamten oder des Großteils der flüssigen Fraktion der Abfallaufschlämmung unterzogen wird, und

- das entstehende Pulvergemisch herkömmlichen Prozessen zum Formen des Nichtoxid-Keramikmaterials unterzogen wird.

**2.** Verfahren nach Anspruch 1, **dadurch gekennzeichnet, dass** der Hauptteil der flüssigen Fraktion der Abfallaufschlämmung von der festen Fraktion durch Absetzen und anschließendes Dekantieren abgeschieden wird.

**3.** Verfahren nach Anspruch 2, **dadurch gekennzeichnet, dass**, wenn das Verfahren zum Herstellen von siliziumnitrid-gebundenem Siliziumkarbid aus einer Abfallaufschlämmung auf Glykol-Basis eingesetzt wird, das Herstellungsverfahren umfasst:

- Entfernen des Glykol-Rückstandes in dem Niederschlag durch sanftes Erhitzen im Vakuum,

- Formen des entstehenden Gemischs aus Si- und SiC-Teilchen zu einem geformten Gegenstand, und

- Sintern des keramischen Materials durch Erhitzen des geformten Gegenstandes in einer Stickstoff-Atmosphäre bei einer Temperatur, bei der die Si-Teilchen mit $N_2$ reagieren, um das Siliziumnitrid auszubilden, das die SiC-Teilchen miteinander verbindet.

**4.** Verfahren nach Anspruch 3, **dadurch gekennzeichnet, dass**:

- das sanfte Erhitzen zum Verdampfen des Glykol-Rückstandes bei einer Temperatur in der Größenordnung 200-400°C durchgeführt wird,

- die Verdichtung durch eine Kraft in der Größenordnung von 100 MPa erreicht wird, und

- das Sintern bei einer Temperatur im Bereich 1050-1350°C bei einem Stickstoff-Druck in der Größenordnung von $10^5$ Pa durchgeführt wird.

5. Verfahren nach Anspruch 3 und 4, für den Fall, dass die Abfallaufschlämmung auf Öl basiert und ein Gemisch aus Si- sowie SiC-Teilchen und Mineralöl enthält, **dadurch gekennzeichnet, dass**:

- das Abscheiden des Hauptteils der flüssigen Phase Absetzen und anschließendes Dekantieren umfasst,

und dadurch, dass:

das Entfernen des Ölrückstandes das Erhitzen des Niederschlags in einer inerten Atmosphäre bis zum Abbau der Kohlenwasserstoffe in dem Öl durch Pyrolyse zum Ausbilden von elementarem Kohlenstoff umfasst,

- das entstehende Pulvergemisch zu einem geformten Objekt geformt wird, und

- das Keramikmaterial durch Sintem des geformten Objektes in einer Stickstoffatmosphäre bei einer Temperatur ausgebildet wird, bei der das elementare C mit Si reagiert, um SiC auszubilden, und anschließend die verbleibenden Si-Teilchen mit $N_2$ reagieren, um das Siliziumnitrid auszubilden, das die SiC-Teilchen miteinander versintert.

6. Verfahren nach Anspruch 5, **dadurch gekennzeichnet, dass**:

- die Pyrolyse-Temperatur im Bereich 700-800°C liegt und 2 Stunden lang aufrechterhalten wird,

- die Verdichtung durch eine Kraft in der Größenordnung von 100 MPa erreicht wird, und

- das Sintern bei einer Temperatur in der Größenordnung 1050-1350°C und bei einem Stickstoffdruck in der Größenordnung von $10^5$ Pa durchgeführt wird.

7. Verfahren nach Anspruch 2, **dadurch gekennzeichnet, dass**, wenn das Verfahren zum Herstellen von siliziumgebundenem Siliziumkarbid eingesetzt wird, das Herstellungsverfahren umfasst:

- Entfemen des Ölrückstandes in dem Niederschlag durch Pyrolyse zum Ausbilden von elementarem C,

- Formen des entstehenden Gemischs aus Si- und SiC-Teilchen sowie elementarem C zu einem geformten Gegenstand, und

- Sintern des Keramikmaterials durch Erhitzen des verdichteten Gegenstandes in einer inerten Atmosphäre bei einer Temperatur, bei der die Si-Teilchen zunächst mit C reagieren, um SiC zu bilden, und dann bei einer Temperatur, bei der die verbleibenden Si-Teilchen die SiC-Teilchen miteinander verbinden.

8. Verfahren nach Anspruch 7, **dadurch gekennzeichnet, dass**:

- die Pyrolyse-Temperatur im Bereich 700-800°C liegt und 2 Stunden lang aufrechterhalten wird,

- das Verdichten durch eine Kraft in der Größenordnung von 160 MPa erreicht wird, und

- das Sintern bei einer Temperatur im Bereich 1050-1350°C bei einem Druck von inertem Gas in der Größenordnung von $10^5$ Pa durchgeführt wird.

9. Verfahren nach einem der Ansprüche 1-6, **dadurch gekennzeichnet, dass** die Zusammensetzung des gereinigten Si- und SiC-Teilchengemischs vorzugsweise 2-100 Gew.-% Si-Teilchen, noch besser 10-50 Gew.-% Si-Teilchen und am besten 15-30 % Si-Teilchen enthalten sollte.

10. Verfahren nach Anspruch 9, **dadurch gekennzeichnet, dass**, wenn die Abfallaufschlämmung auf Öl basiert, die entstehende Zusammensetzung des Si- und SiC-Teilchengemischs, nachdem das elementare C, das während der Pyrolyse des Öls entstanden ist, in SiC umgewandelt worden ist, vorzugsweise 2-100 Gew.-% Si-Teilchen, noch besser 10-50 Gew.-% Si-Teilchen und am besten 15-30 % Si-Teilchen enthalten sollte.

**11.** Verfahren nach Anspruch 1, **dadurch gekennzeichnet, dass** der herkömmliche Herstellungsprozess isostatisches Pressen, Trockenpressen, Schlickergießen, Sintern und/oder Extrudieren umfasst.

**12.** Einsatz von Abfallaufschlämmung, die ein Gemisch aus Si- und SiC-Teilchen sowie eine flüssige Phase, die Glykol oder Mineralöl umfasst, enthält, um ein Nichtoxid-Keramikmaterial, d.h. $Si_3N_4$-gebundenes SiC, herzustellen.

**13.** Einsatz von Abfallaufschlämmung von der Herstellung von hochreinen Silizium-Wafern in der Photovoltaik- und/ oder Halbleiterindustrie zum Erzeugen eines Nichtoxid-Keramikmaterials, d.h. von $Si_3N_4$-gebundenem SiC, gemäß dem Verfahren nach den Ansprüchen 1-6 und/oder 9.

**14.** Einsatz von Abfallaufschlämmung von der Herstellung hochreiner Silizium-Wafer in der Photovoltaik- und/oder Halbleiterindustrie zum Erzeugen eines Nichtoxid-Keramikmaterials, d.h. von Si-gebundenem SiC, gemäß dem Verfahren nach den Ansprüchen 7-8 und/oder 10.

**Revendications**

**1.** Procédé de production de céramiques non oxydées, **caractérisé en ce que**

- le procédé utilise une suspension usée contenant un mélange de particules de Si et de SiC et un liquide comprenant de l'huile ou du glycol,

- la boue usée est soumise à un procédé de séparation pour retirer la totalité de la fraction liquide ou la majeure partie de celle-ci de la suspension usée, et

- le mélange en poudre obtenu est soumis à des procédés classiques pour former le matériau de céramique non oxydé.

**2.** Procédé selon la revendication 1, **caractérisé en ce que** la majeure partie de la fraction liquide de la suspension usée est séparée de la fraction solide par dépôt et décantation consécutive.

**3.** Procédé selon la revendication 2, **caractérisé en ce que**, lorsque le procédé est appliqué pour produire un carbure de silicium lié à un nitrure de silicium à partir d'une suspension usée à base de glycol, le procédé de production comprend :

- le retrait du résidu de glycol dans le précipité par chauffage léger sous vide

- la formation du mélange obtenu de particules de Si et SiC en un objet profilé et

- le frittage du matériau de céramique en chauffant l'objet profilé sous atmosphère d'azote à une température à laquelle les particules de Si réagissent avec $N_2$ pour former le nitrure de silicium reliant les particules de SiC les unes avec les autres.

**4.** Procédé selon la revendication 3, **caractérisé en ce que**

- le chauffage léger pour la vaporisation du résidu de glycol est réalisé à une température de l'ordre de 200 à 400°C,

- le compactage est réalisé par une force de l'ordre de 100 MPa, et

- le frittage est réalisé à une température de l'ordre de 1050 à 1350°C sous une pression d'azote de l'ordre de $10^5$ Pa.

**5.** Procédé selon les revendications 3 et 4, dans le cas où la suspension usée est à base d'huile et contient un mélange de particules de Si et de SiC et d'huile minérale, **caractérisé en ce que**

- la séparation de la majeure partie de la phase liquide comprend le dépôt et la décantation ultérieure,

et **en ce que**

- le retrait du résidu huileux comprend le chauffage du précipité dans une atmosphère inerte jusqu'à ce que les hydrocarbures dans l'huile se décomposent par pyrolyse pour former un carbone élémentaire,

- le mélange de poudre obtenu est formé en un objet profilé ; et

- le matériau de céramique est formé par frittage de l'objet profilé sous une atmosphère d'azote à une température à laquelle le C élémentaire réagit avec le Si pour former SiC, et ensuite, dans lequel les particules de Si restantes réagissent avec $N_2$ pour former le nitrure de silicium qui agglomère par frittage les particules de SiC les unes aux autres.

6.  Procédé selon la revendication 5, **caractérisé en ce que**

- la température de la pyrolyse est de l'ordre de 700 à 800°C, et est maintenue pendant 2 heures,

- le compactage est réalisé par une force de l'ordre de 100 MPa, et

- le frittage est réalisé à une température de l'ordre de 1050 à 1350°C et sous une atmosphère d'azote de l'ordre de $10^5$ Pa.

7.  Procédé selon la revendication 2, **caractérisé en ce que**, lorsque le procédé est appliqué pour produire du carbure de silicium lié avec du silicium, le procédé de production comprend :

- le retrait du résidu huileux dans le précipité par hydrolyse pour former du C élémentaire,

- la formation du mélange obtenu de particules de Si et de SiC et de C élémentaire en un objet profilé, et

- le frittage du matériau de céramique en chauffant l'objet compacté dans une atmosphère inerte à une température à laquelle les particules de Si réagissent tout d'abord avec le C pour former SiC, puis à une température à laquelle les particules restantes lient les particules de SiC les unes avec les autres.

8.  Procédé selon la revendication 7, **caractérisé en ce que**

- la température de pyrolyse est de l'ordre de 700 à 800°C et est maintenue pendant 2 heures,

- le compactage est réalisé par une force de l'ordre de 160 MPa, et

- le frittage est réalisé à une température de l'ordre de 1050 à 1350°C à une pression de gaz inerte de l'ordre de $10^5$ Pa.

9.  Procédé selon l'une quelconque des revendications 1 à 6, **caractérisé en ce que** la composition du mélange de particules de Si et SiC purifié doit contenir de préférence de 2 à 100 % en poids de particules de Si, de manière davantage préférée de 10 à 50 % en poids de particules de Si, et de manière préférée entre toutes de 15 à 30 % de particules de Si.

10. Procédé selon la revendication 9, **caractérisé en ce que**, lorsque la suspension usée est à base d'huile, la composition obtenue de particules de Si et de SiC après que le C élémentaire qui est formé pendant la pyrolyse de l'huile, a été transformé en SiC, doit contenir de préférence de 2 à 100 % en poids de particules de Si, de manière davantage préférée de 10 à 50 % en poids de particules de Si, et de manière préférée entre toutes, de 15 à 30 % de particules de Si.

11. Procédé selon la revendication 1, **caractérisé en ce que** le procédé de production classique comprend la compression isostatique, la compression à sec, le coulage en barbotine, le frittage et/ou l'extrusion.

12. Utilisation d'une suspension usée contenant un mélange de particules de Si et de SiC, et une phase liquide comprenant du glycol ou de l'huile minérale pour produire un matériau de céramique non oxydé de SiC lié par $Si_3N_4$.

13. Utilisation de suspension usée à partir de la production de tranches de silicium de haute pureté dans l'industrie photovoltaïque et/ou des semi-conducteurs pour produire un matériau céramique non oxydé, de SiC lié par $Si_3N_4$ selon le procédé indiqué dans les revendications 1 à 6 et/ou 9.

14. Utilisation d'une suspension usée à partir de la production de tranches de silicium de haute pureté dans l'industrie photovoltaïque et/ou des semi-conducteurs pour produire un matériau céramique non oxydé, de SiC lié par Si selon le procédé indiqué dans les revendications 7 et 8 et/ou 10.